(19) Europäisches Patentamt
European Patent Office
Office européen des brevets

(11) Veröffentlichungsnummer: **0 320 531 B1**

(12) **EUROPÄISCHE PATENTSCHRIFT**

(45) Veröffentlichungstag der Patentschrift: **19.06.91**

(51) Int. Cl.$^5$: **B27K 3/50,** B27K 3/40

(21) Anmeldenummer: **87118810.8**

(22) Anmeldetag: **18.12.87**

(54) **Mittel oder Konzentrat zum Konservieren von Holz und Holzwerkstoffen.**

(43) Veröffentlichungstag der Anmeldung:
**21.06.89 Patentblatt 89/25**

(45) Bekanntmachung des Hinweises auf die Patenterteilung:
**19.06.91 Patentblatt 91/25**

(84) Benannte Vertragsstaaten:
**AT BE CH DE ES FR GB GR IT LI LU NL SE**

(56) Entgegenhaltungen:
**EP-A- 0 050 738**
**EP-A- 0 198 165**
**EP-A- 0 218 024**
**DE-A- 3 414 244**
**DE-B- 2 644 077**

(73) Patentinhaber: **DESOWAG Materialschutz GmbH**
**Rossstrasse 76 Postfach 32 02 20**
**W-4000 Düsseldorf 30(DE)**

(72) Erfinder: **Grüning, Rainer, Dr. Dipl.-Chem.**
**Franz-Hitze-Strasse 14**
**W-4150 Krefeld(DE)**
Erfinder: **Metzner, Wolfgang, Dr. Dipl.-Chem.**
**Buschstrasse 151**
**W-4150 Krefeld(DE)**

(74) Vertreter: **Seiler, Siegfried**
**Langhansstrasse 6**
**W-5650 Solingen 11(DE)**

**EP 0 320 531 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Mittel zum Konservieren von Holz und Holzwerkstoffen auf der Bais von oder unter Mitverwendung von 1-[[2-(2,4-dichlorphenyl)-1,3-dioxolan-2-yl]methyl]-1H-1,2,4-triazol, mindestens eines Verdünnungsmittels sowie ggf. eines Fungizides, Verarbeitungshilfs- und/oder Zusatzmittels, eines organisch-chemischen Bindemittels und/oder Fixierungsmittels, Farbstoffes, Pigmentes, Farbstoff-oder Pigmentgemisches.

Die chemische Verbindung 1-[[2-(2,4-dichlorphenyl)-1,3-dioxolan-2-yl]methyl]-1H-1,2,4-triazol, (Azaconazol) mit der Strukturformel

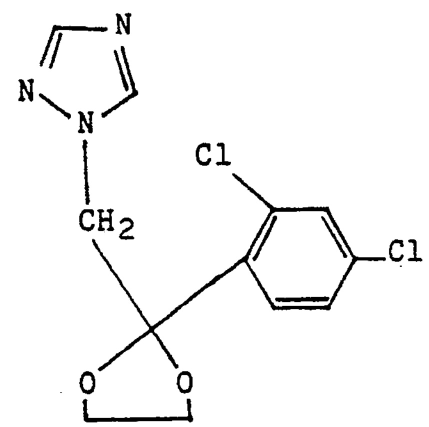

ist bereits aus der DE-PS 25 51 560 als fungizides und pflanzenwuchsregulierendes Mittel in der Landwirtschaft bekannt.

An Holzkonservierungsmittel werden aber Anforderungen gestellt, die von denen der Fungizide im Pflanzenschutz erheblich abweichen.

Ziel und Aufgabe der vorliegenden Erfindung war es daher, ein Holzkonservierungsmittel zu finden, das gegenüber holzverfärbenden und holzzerstörenden Pilzen sowie gegenüber holzschädigenden Insekten, insbesondere gegenüber Termiten hochwirksam ist und eine gute Langzeitwirkung aufweist, wobei die Wirksamkeit des Fungizides durch das Insektizid nicht beeinträchtigt wird bzw. umgekehrt. Darüber hinaus sollte das Holzkonservierungsmittel eine gutes Eindringvermögen im Holz und in den Holzwerkstoffen aufweisen.

Erfindungsgemäß wurde festgestellt, daß diesen Zielen und Aufgaben ein Mittel oder Konzentrat zum Konservieren von Holz und Holzwerkstoffen auf der Basis von oder unter Mitverwendung von 1-[[2-(2,4-dichlorphenyl)-1,3-dioxolan-2-yl]methyl]-1H-1,2,4-triazol, mindestens eines Verdünnungsmittels sowie ggf. eines Fungizids, Verarbeitungshilfs- und/oder Zusatzmittels, eines organisch-chemischen Bindemittels und/oder Fixierungsmittels, Farbstoffes, Pigmentes, Farbstoff-oder Pigmentgemisches gerecht wird, das 0,001 - 5 Gew.-%, vorzugsweise 0,2 - 2 Gew.-%, 1-[[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat und mehr als 75 Gew.-%, vorzugsweise mehr als 90 Gew.-%, eines Gemisches, bestehend aus mindestens einem Verdünnungsmittel und/oder mindestens einem Emulgator und/oder Netzmittel oder -Gemisch derselben, enthält.

Zwar ist bereits bekannt, daß Thiophosphorsäureester gute insektizide Wirkung aufweisen und daher in Pflanzenschutzmitteln eingesetzt werden. In diesen Mitteln besteht jedoch für diese Insektizide die Forderung, daß sie nach einer gewissen Zeit abgebaut sein müssen, damit keine Gefahr für Menschen und Tiere bei der Nahrungsaufnahme besteht. Außerdem dürfen derartige Mittel nicht zu tief in die Pflanzenteile eindringen, damit sie leicht abgewaschen werden können. In Holzkonservierungsmitteln ist dagegen eine Langzeitwirkung erforderlich.

Das erfindungsgemäß verwendete Verdünnungsmittel enthält nach einer Ausführungsform ein organisch-chemisches Lösungsmittel oder Lösungsmittelgemisch, vorzugsweise mindestens ein polares, organisch-chemisches Lösungsmittel und/oder ein öliges oder ölartiges schwerflüchtiges organisch-chemisches Lösungsmittel, oder ein Gemisch aus Wasser und/oder mindestens einem organisch-chemischen Lösungsmittel, vorzugsweise mindestens einem polaren organisch-chemischen Lösungsmittel und/oder einem öligen oder ölartigen, schwerflüchtigen, organisch-chemischen Lösungsmittel oder Lösungsmittelgemisch, und mindestens einem Emulgator und/oder Netzmittel oder besteht daraus.

Nach einer weiteren Ausführungsform enthält das Holzkonservierungsmittel oder -konzentrat 0,1 - 25 Gew.-%, vorzugsweise 1- 18 Gew.-%, (berechnet als Feststoff) mindestens eines Bindemittels und/oder Fixierungsmittels.

Erfindungsgemäß beträgt nach einer Ausführungsform das Gewichtsverhältnis von Bindemittel, Fixierungsmittel und/oder eines deren Gemische zu dem Verdünnungsmittel oder Verdünnungsmittelgemischund zu dem im Mittel oder Konzentrat enthaltenden Emulgator oder Emulgatorgemisch und/oder Netzmittel oder Netzmittelgemisch 8,5 : 1 bis 1 : 99.

Nach einer weiteren Ausführungsform ist das organisch-chemische Bindemittel oder Bindemittelgemisch teilweise durch mindestens einen Weichmacher ersetzt.

Gemäß einer vorteilhaften Ausführungsform enthält das Mittel zum Konservieren von Holz 0,001 - 5 Gew.-%, vorzugsweise 0,2 - 2 Gew.-% 1-[[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 0,0-Diethyl-0-(3,5,6-trichlor-2-pyridyl)-thiophosphat, 0,0-Diethyl-0-( -cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat und 0,1 - 28 Gew.-%, vorzugsweise 1 - 18 Gew.-%, (berechnet als Feststoff) mindestens eines organisch-chemischen Bindemittels und/oder Fixierungsmittels oder Weichmachers und das Gewichtsverhältnis des Gesamtanteiles an organisch-chemischem Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel) beträgt 1 : 1,2 bis 1 : 99, vorzugsweise 1 : 2 bis 1 : 25.

Vorteilhaft besteht nach einer Ausführungsform das Verdünnungsmittel aus mindestens einem organisch-chemischen, schwerflüchtigen Lösungsmittel mit einer Verdunstungszahl über 35 und einem Flammpunkt oberhalb 30 °C, vorzugsweise aus einem öligen oder ölartigen, organisch-chemischen Lösungsmittel oder Lösungsmittelgemisch oder enthält ein oder mehrere dieser schwerflüchtigen Lösungsmittel.

Gemäß einer weiteren Ausführungsform sind 0,5 bis 23 Gew.-%, vorzugsweise 2 - 15 Gew.-%, des organisch-chemischen, schwerflüchtigen Lösungsmittels bzw. Lösungsmittelgemisches mit einem Flammpunkt oberhalb 30 °C, durch die gleiche Menge eines oder mehrerer organisch-chemischer Bindemittel und/oder Fixierungsmittel ersetzt, wobei als organisch-chemische Bindemittel und/oder Fixierungsmittel solche eingesetzt werden, die in den Lösungsmittel bzw. Lösungsmittelmittelgemisch verteilbar bzw. emulgierbar, vorzugsweise jedoch löslich sind, wobei der Ersatz mit der Maßgabe erfolgt, daß die erhaltene Mischung bzw. das erhaltene Lösungsmittelgemisch ebenfalls einen Flammpunkt über 30 °C aufweist und das organisch-chemische Lösungsmittel bzw. Lösungsmittelgemisch ein öliges oder ölartiges Lösungsmittel ist.

Nach einer bevorzugten Ausführungsform besteht das anwendungsfertige Mittel zum Konservieren von Holz und Holzwerkstoffen aus 0,001 - 5 Gew.-%, vorzugsweise 0,2 - 2 Gew.-%, 1-[[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat, 0,1 - 28 Gew.-%, vorzugsweise 1 - 18 Gew.-%, mindestens eines organisch-chemischen Bindemittels und/oder Fixierungsmittels oder Weichmachers, 0 - 5 Gew.-%, vorzugsweise 0,01 - 4 Gew.-%, mindestens eines anderen in dem organisch-chemischen Lösungsmittel oder Lösungsmittelgemisch löslichen Biozides oder Biozidgemisches, 0 - 8 Gew.-%, vorzugsweise 0,1 - 4 Gew.-%, mindestens eines wasserlöslichen und/oder wasserunlöslichen Farbstoffes, Farbpigmentes und/oder Korrosionsschutzmittels, Siccatives und/oder UV-Stabilisators und 99,599 Gew.-% - 51 Gew.-%, vorzugsweise 98,190 Gew.-% - 70 Gew.-%, eines Verdünnungsmittels oder Verdünnungsmittelgemisches, bestehend aus mindestens einem organisch-chemischen Lösungsmittel oder Lösungsmittelgemisch und/oder Wasser und/oder mindestens einem Emulgator und/oder Netzmittel oder -gemisch derselben.

Das erfindungsgemäße Konzentrat enthält nach einer Ausführungsform 0,001 - 5 Gew.-%, vorzugsweise 0,2 - 2 Gew.-%,[[1- 2-(2,4-dichlorphenyl)-1,3-dioxolan-2-yl] methyl]-1H-1,2,4-triazol, 0,3 - 3 Gew.-%, vorzugsweise 0,5 - 2 Gew.-%, 0,0-Diethyl-0-(3,5,6-trichlor-2-pyridyl)-thiophosphat, 0,0-Diethyl-0-(α-cyanbenzylidenamino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat, 2 - 85 Gew.-%, vorzugsweise 8 - 40 Gew.-%, (berechnet als Feststoff) mindestens eines organisch-chemischen Bindemittels und/oder Fixierungsmittels oder Weichmachers und das Gewichtsverhältnis des Gesamtanteiles an organisch-chemischen Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel) beträgt 8,5 : 1 bis 1 : 48, vorzugsweise 1 : 1,45 bis 1 : 11,5.

Nach einer bevorzugten Ausführungsform enthält das erfindungsgemäße Konzentrat zum Konservieren von Holz und Holzwerkstoffen 0,001 - 5 Gew.-%, vorzugsweise 0,2 - 2 Gew.-%, 1- [[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat, 2 - 85 Gew.-%, vorzugsweise 8 - 60 Gew.-%, mindestens eines organisch-chemischen Bindemittels und/oder Fixierungsmittels oder Weichmachers, 20 - 0 Gew.-%, vorzugsweise 8 - 1 Gew.-%, eines in dem organisch-chemischen Lösungsmittel oder Lösungsmittelgemisch löslichen Fungizides oder Fungizidgemisches und einem Verdünnungsmittel oder Verdünnungsmittelgemisch als Restbestandteil, bestehend aus mindestens einem organisch-chemischen Lösungsmittel oder Lösungsmittelgemisch oder Wasser und/oder Lösungsmittel oder Lösungsmittelgemisch und/oder mindestens einem Emulgator und/oder Netzmittel oder einem -Gemisch derselben sowie gegebenenfalls Farbstoffen, Farbpigmenten, Korrosionsschutzmittel, Siccativen und/oder UV-Stabilisatoren.

Die Erfindung betrifft weiterhin ein Verfahren zur Herstellung des erfindungsgemäßen Mittels oder Konzentrats zum Konservieren von Holz und Holzwerkstoffen.

Gemäß diesem Verfahren werden die Wirkbestandteile des Mittels oder Konzentrats bei Temperaturen von - 5 °C bis 80 °C, vorzugsweise 15 °C bis 45 °C, und bei Drücken von 400 mm Hg bis 850 mm Hg (0,5332 bis 1,1332 bar, vorzugsweise 600 mm Hg bis 790 mm Hg (0,7999 bis 1,0532 bar) mit dem Verdünnungsmittel sowie den anderen Bestandteilen versetzt.

Beispiele

1. Termitizides Holzkonservierungsmittel, insbesondere zur Imprägnierung:

| | |
|---|---|
| 1-[[2-(2,4-dichlorphenyl)-1,3-dioxolan-2-yl]methyl]-1H-1,2,4-triazol (Azaconazol) | 1,0 % |
| 0,0-Diethyl-0-(α-cyanbenzyliden-amino)-thiophosphat (Phoxim) | 1,5 % |
| Dibutylphthalat | 6,0 % |
| Kontrollfarbstoff | 0,2 % |
| Duftstoff | 0,04 % |
| Testbenzin (Gemisch aliphatischer und aromatischer Kohlenwasserstoffe) | 91,26 % |

2. Termitizides Holzkonservierungsmittel, insbesondere zur Imprägnierung:

| | |
|---|---|
| 1-[[2-(2,4-dichlorphenyl)-1,3-dioxolan-2-yl]methyl]-1H-1,2,4-triazol (Azaconazol) | 1,4 % |
| 0,0-Diethyl-0-(3,5,6-trichlor-2-pyridyl)-thiophosphat, (Chlorpyrifos) | 1,2 % |
| Dibutylphthalat | 4,0 % |
| Gasöl (Hochsieder) | 10,0 % |
| Mineralöl (Gemisch aliphatischer und aromatischer Kohlenwasserstoffe) | 83,40 % |

3. Termitizides Holzkonservierungsmittel:

| | |
|---|---|
| 1-[[2-(2,4-dichlorphenyl)-1,3-dioxolan-2-yl] methyl] -1H-1,2,4-triazol (Azaconazol) | 0,8 % |
| 0,0-Diethyl-0-(1,6-dihydro-6-oxo-1-phenyl-3-pyridazinyl)-thiophosphat (Pyridafenthion) | 1,4 % |
| Leinölfirnis | 4,0 % |
| Mineralöl (Gemisch aliphatischer und aromatischer Kohlenwasserstoffe) | 93,80 % |

4. Termitizides Holzkonservierungsmittel:

| | |
|---|---|
| 1-[[2-(2,4-dichlorphenyl)-1,3-dioxolan-2-yl] methyl] -1H-1,2,4-triazol (Azaconazol) | 0,37 % |
| 0,0-Diethyl-0-(α-cyanbenzyliden-amino)-thiophosphat (Phoxim) | 0,9 % |
| 2-Isopropoxyphenyl-N-methylcarbamat (Propoxur) | 0,9 % |
| Dibutylphthalat | 4,0 % |
| Bitumen | 1,0 % |
| Duftstoff | 0,042 % |
| Testbenzin (Gemisch aliphatischer und aromatischer Kohlenwasserstoffe) | 92,788 % |

5. Termitizides Holzkonservierungsmittel:

| | |
|---|---|
| 1-[[2-(2,4-dichlorphenyl)-1,3-dioxolan-2-yl] methyl] -1H-1,2,4-triazol (Azaconazol) | 1,4 % |

| | |
|---|---|
| O,O-Diethyl-O-(α-cyanbenzyliden-amino)-thiophosphat (Phoxim) | 1,6 % |
| 2-Isopropoxyphenyl-N-methylcarbamat (Propoxur) | 0,9 % |
| Ethylglykolacetat | 3,0 % |
| Leinölfirnis | 5,0 % |
| Spindelöl | 10,0 % |
| Duftstoff | 0,04 % |
| Testbenzin (Gemisch aliphatischer und aromatischer Kohlenwasserstoffe) | 78,16 % |

6. Termitizides Holzkonservierungsmittel;

| | |
|---|---|
| 1-[[2-(2,4-dichlorphenyl)-1,3-dioxolan-2-yl]methyl]-1H-1,2,4-triazol (Azaconazol) | 1 % |
| O,O-Diethyl-O-(α-cyanbenzyliden-amino)-thiophosphat (Phoxim) | 1 % |
| 2-Isopropxyphenyl-N-methylcarbamat (Propoxur) | 1 % |
| 2-sek.-Butylphenyl-N-methylcarbamat (Baycarb) | 1 % |
| Alkydharz 70 %ig | 4 % |
| Testbenzin (Gemisch aliphatischer und aromatischer Kohlenwasserstoffe) | 92 % |

## Ansprüche

**1.** Mittel oder Konzentrat zum Konservieren von Holz und Holzwerkstoffen auf der Basis von oder unter Mitverwendung von

1-[[2-(2,4-dichlorphenyl)-1,3-dioxolan-2-yl]methyl] -1H-1,2,4-triazol,

mindestens eines Verdünnungsmittels sowie ggf. eines Fungizids, Verarbeitungshilfs- und/oder Zusatzmittels, eines organisch-chemischen Bindemittels und/oder Fixierungsmittels, Farbstoffes, Pigmentes, Farbstoff- oder Pigmentgemisches, dadurch gekennzeichnet, daß das Mittel oder Konzentrat

0,001 - 5 Gew.-%, vorzugsweise
0,2 - Gew.-%,

1-[[2-(2,4-dichlorphenyl)-1,3-dioxolan-2-yl]methyl] -1H-1,2,4-triazol,

0,3 - 3 Gew.-%, vorzugsweise
0,5 - 2 Gew.-%,

0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat und

mehr als 75 Gew.-%, vorzugsweise
mehr als 90 Gew.-%,

eines Gemisches, bestehend aus mindestens einem Verdünnungsmittel und/oder mindestens einem Emulgator und/oder Netzmittel oder -gemisch derselben, enthält.

**2.** Mittel oder Konzentrat nach Anspruch 1, dadurch gekennzeichnet, daß das Verdünnungsmittel ein organisch-chemisches Lösungsmittel oder Lösungsmittelgemisch, vorzugsweise mindestens ein polares, organisch-chemisches Lösungsmittel und/oder ein öliges oder ölartiges schwerflüchtiges organisch-chemisches Lösungsmittel, oder ein Gemisch aus Wasser und/oder mindestens einem organisch-chemischen Lösungsmittel, vorzugsweise mindestens einem polaren organisch-chemischen Lösungsmittel, und/oder einem öligen oder ölartigen, schwerflüchtigen, organisch-chemischen Lösungsmittel oder Lösungsmittelgemisch, und mindestens einem Emulgator und/oder Netzmittel, enthält oder daraus besteht.

**3.** Mittel oder Konzentrat zum Konservieren von Holz und Holzwerkstoffen nach Ansprüchen 1 und 2, dadurch gekennzeichnet, daß das Mittel

0,1 - 25 Gew.-%
(berechnet als Feststoff),
vorzugsweise
1 - 18 Gew.-%,

mindestens eines Bindemittels und/oder Fixierungsmittels enthält.

**4.** Mittel oder Konzentrat nach einem oder mehreren der Ansprüche 1 - 3, dadurch gekennzeichnet, daß das Gewichtsverhältnis von Bindemittel, Fixierungsmittel und/oder eines deren Gemische zu dem Verdünnungsmittel oder Verdünnungsmittelgemisch und zu dem im Mittel oder Konzentrat enthaltenden Emulgator oder Emulgatorgemisch und/oder Netzmittel oder Netzmittelgemisch

8,5 : 1 bis 1 : 99

beträgt.

**5.** Mittel oder Konzentrat nach einem oder mehreren der Ansprüche 1 - 4, dadurch gekennzeichnet, daß das organisch-chemische Bindemittel oder Bindemittelgemisch teilweise durch mindestens einen Weichmacher ersetzt ist.

**6.** Mittel zum Konservieren von Holz und Holzwerkstoffen nach einem oder mehreren der Ansprüche 1 - 5, dadurch gekennzeichnet, daß das Mittel (das anwendungsfertige Mittel)

0,001 - 5 Gew.-%, vorzugsweise
0,2 - 2 Gew.-%,

1-[[2-(2,4-dichlorphenyl)-1,3-dioxolan-2-yl]methyl]-1H-1,2,4-triazol,

0,3 - 3 Gew.-%, vorzugsweise
0,5 - 2 Gew.-%,

0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat und

0,1 - 28 Gew.-%, vorzugsweise
1 - 18 Gew.-%,

(berechnet als Feststoff) mindestens eines organisch-chemischen Bindemittels und/oder Fixierungsmittels oder Weichmachers enthält und das Gewichtsverhältnis des Gesamtanteiles an organisch-chemischem Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel)

1 : 1,2 bis 1 : 99, vorzugsweise
1 : 2 bis 1 : 25,

beträgt.

**7.** Mittel zum Konservieren von Holz und Holzwerkstoffen nach einem oder mehreren der Ansprüche 1 bis 6, dadurch gekennzeichnet, daß das Verdünnungsmittel aus mindestens einem organisch-chemischen, schwerflüchtigen Lösungsmittel mit einer Verdunstungszahl über 35 und einem Flammpunkt oberhalb 30 °C, vorzugsweise aus einem öligen oder ölartigen, organisch-chemischen Lösungsmittel oder Lösungsmittelgemisch besteht oder ein oder mehrere dieser schwerflüchtigen Lösungsmittel enthält.

**8.** Mittel zum Konservieren von Holz und Holzwerkstoffen nach Anspruch 7, dadurch gekennzeichnet, daß

0,5 bis 23 Gew.-%, vorzugsweise
2 bis 15 Gew.-%,

des organisch-chemischen, schwerflüchtigen Lösungsmittels bzw. Lösungsmittelgemisches mit einem Flammpunkt oberhalb 30 °C, durch die gleiche Menge eines oder mehrerer organisch-chemischer Bindemittel und/oder Fixierungsmittel ersetzt sind, wobei als organisch-chemische Bindemittel und/oder Fixierungsmittel solche eingesetzt werden, die in dem Lösungsmittel bzw. Lösungsmittelmittelgemisch verteilbar bzw. emulgierbar, vorzugsweise jedoch löslich sind, wobei der Ersatz mit der Maßgabe erfolgt, daß die erhaltene Mischung bzw. das erhaltene Lösungsmittelgemisch ebenfalls einen Flammpunkt über 30 °C aufweist und das organisch-chemische Lösungsmittel bzw. Lösungsmittelgemisch ein öliges oder ölartiges Lösungsmittel ist.

**9.** Mittel zum Konservieren von Holz und Holzwerkstoffen nach einem oder mehreren der Ansprüche 1 - 8, dadurch gekennzeichnet, daß das anwendungsfertige Mittel aus

0,001 - 5 Gew.-%, vorzugsweise
0,2 - 2 Gew.-%,

1-[[2-(2,4-dichlorphenyl)-1,3-dioxolan-2-yl]methyl]-1H-1,2,4-triazol,

0,3 - 3 Gew.-%, vorzugsweise
0,5 - 2 Gew.-%,

0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat

0,1 - 28 Gew.-%, vorzugsweise
1 - 18 Gew.-%,

mindestens eines organisch-chemischen Bindemittels und/oder Fixierungsmittels oder Weichmachers,

0 - 5 Gew.-%, vorzugsweise
0,01 - 4 Gew.-%,

mindestens eines anderen in dem organisch-chemischen Lösungsmittel oder Lösungsmittelgemisch

löslichen Biozides oder Biozidgemisches,

0 - 8 Gew.-%, vorzugsweise
0,1 - 4 Gew.-%,

mindestens eines wasserlöslichen und/oder wasserunlöslichen Farbstoffes, Farbpigmentes und/oder Korrosionsschutzmittels, Siccatives und/oder UV-Stabilisators und

99,599 Gew.-% - 51 Gew.-%, vorzugsweise
98,190 Gew.-% - 70 Gew.-%,

eines Verdünnungsmittels oder Verdünnungsmittelgemisches, bestehend aus mindestens einem organisch-chemischen Lösungsmittel oder Lösungsmittelgemisch und/oder Wasser und/oder mindestens einem Emulgator und/oder Netzmittel oder -gemisch derselben, besteht.

**10.** Konzentrat zum Konservieren von Holz und Holzwerkstoffen nach einem oder mehreren der Ansprüche 1 - 8, dadurch gekennzeichnet, daß das Konzentrat

0,001 - 5 Gew.-%, vorzugsweise
0,2 - 2 Gew.-%,

1-[[2-(2,4-dichlorphenyl)-1,3-dioxolan-2-yl]methyl]-1H-1,2,4-triazol,

0,3 - 3 Gew.-%, vorzugsweise
0,5 - 2 Gew.-%,

0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat

2 - 85 Gew.-%, vorzugsweise
8 - 40 Gew.-%,

(berechnet als Feststoff) mindestens eines organisch-chemischen Bindemittels und/oder Fixierungsmittels oder Weichmachers enthält und das Gewichtsverhältnis des Gesamtanteiles an organisch-chemischen Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel)

8,5 : 1 bis 1 : 48, vorzugsweise
1 : 1,45 bis 1 : 11,5,

beträgt.

**11.** Konzentrat zum Konservieren von Holz und Holzwerkstoffen nach einem oder mehreren der Ansprüche 1 - 8 und 10, dadurch gekennzeichnet, daß das Konzentrat

0,001 - 5 Gew.-%, vorzugsweise
0,2 - 2 Gew.-%,

1-[[2-(2,4-dichlorphenyl)-1,3-dioxolan-2-yl]methyl]-1H-1,2,4-triazol,

0,3 - 3 Gew.-%, vorzugsweise
0,5 - 2 Gew.-%,

0,0-Diethyl-0-(3,5,6-trichlor-2-pyridyl)-thiophosphat, 0,0-Diethyl-0-(α-cyanbenzyliden-amino)-thiophosphat, 0-Ethyl-0-(2,4-dichlorphenyl)-S-n-propyldithiophosphat und/oder 0,0-Diethyl-0-(1,6-dihydro-6-oxo-1-phenyl-3-pyridazinyl)-thiophosphat

2 - 85 Gew.-%, vorzugsweise
8 - 60 Gew.-%,

mindestens eines organisch-chemischen Bindemittels und/oder Fixierungsmittels oder Weichmachers,

20 - 0 Gew.-%, vorzugsweise
8 - 1 Gew.-%,

eines in dem organisch-chemischen Lösungsmittel oder Lösungsmittelgemisch löslichen Fungizides oder Fungizidgemisches und einem Verdünnungsmittel oder Verdünnungsmittelgemisch als Restbestandteil, bestehend aus mindestens einem organisch-chemischen Lösungsmittel oder Lösungsmittelgemisch oder Wasser und/oder Lösungsmittel oder Lösungsmittelgemisch und/oder mindestens einem Emulgator und/oder Netzmittel oder einem -Gemisch derselben sowie gegebenenfalls Farbstoffen, Farbpigmenten, Korrosionsschutzmittel, Siccativen und/oder UV-Stabilisatoren, enthält.

**12.** Verfahren zur Herstellung des Mittels oder Konzentrates zum Konservieren von Holz und Holzwerkstoffen nach einem oder mehreren der Ansprüche 1 bis 11, dadurch gekennzeichnet, daß die Wirkbestandteile des Mittels oder Konzentrats bei Temperaturen von

-5 °C bis 80 °C, vorzugsweise
15 °C bis 45 °C,

und bei Drücken von

400 mm Hg bis 850 mm Hg (0,5332 bis 1,1332 bar, vorzugsweise
600 mm Hg bis 790 mm Hg (0,7999 bis 1,0532 bar)

mit dem Verdünnungsmittel sowie den anderen Bestandteilen versetzt werden.

## Claims

**1.** Agent or concentrate for preserving wood and timber materials on the basis of or with the joint use of

1-[[2-(2,4-dichlorophenyl)-1,3-dioxolan-2-yl]methyl]-1H-1,2,4-triazol,

at least one diluent and also optionally a fungicide, processing aid and/or additive, an organic-chemical binder and/or fixing agent, dye, pigment, dye mixture or pigment mixture, characterised in that the agent or concentrate contains

0.001 - 5% by weight, preferably
0.2 - 2% by weight,

1-[[2-(2,4-dichlorophenyl)-1,3-dioxolan-2-yl]methyl]-1H-1,2,4-triazol,

0.3 - 3% by weight, preferably
0.5 - 2% by weight,

0,0-diethyl-0-(3,5,6-trichloro-2-pyridyl)-thiophosphate, 0,0-diethyl-0-(α-cyanobenzyliden-amino)-thiophosphate, 0-ethyl-0-(2,4-dichlorophenyl)-S-n-propyldithiophosphate and/or 0,0-diethyl-0-(1,6-dihydro-6-oxo-1-phenyl-3-pyridazinyl)-thiophosphate and

more than 75% by weight, preferably
more than 90% by weight,

of a mixture consisting of at least one diluent and/or at least one emulsifier and/or wetting agent or mixture thereof.

2. Agent or concentrate according to Claim 1, characterised in that the diluent contains an organic-chemical solvent or solvent mixture, preferably at least one polar, organic-chemical solvent and/or an oily or oil-like, poorly volatile, organic-chemical solvent, or a mixture of water and/or at least one organic-chemical solvent, preferably at least one polar, organic-chemical solvent, and/or an oily or oil-like, poorly volatile, organic-chemical solvent or solvent mixture, and at least one emulsifier and/or wetting agent, or consists thereof.

3. Agent or concentrate for preserving wood and timber materials according to Claims 1 and 2, characterised in that the agent contains

   0.1 to 25% by weight (calculated as solid),
   preferably 1 - 18% by weight,

   of at least one binder and/or fixing agent.

4. Agent or concentrate according to one or more of Claims 1 - 3, characterised in that the weight ratio of binder, fixing agent and/or a mixture thereof to the diluent or diluent mixture and to the emulsifier or emulsifier mixture and/or wetting agent or wetting agent mixture contained in the agent or concentrate is

   8.5 : 1 to 1 : 99.

5. Agent or concentrate according to one or more of Claims 1 - 4, characterised in that the organic-chemical binder or binder mixture is partially replaced by at least one softener.

6. Agent for preserving wood and timber materials according to one or more of Claims 1 - 5, characterised in that the agent (the agent ready for use) contains

   0.001 - 5% by weight, preferably
   0.2 - 2% by weight,

   1-[[2-(2,4-dichlorophenyl)-1,3-dioxolan-2-yl]methyl]-1H-1,2,4-triazol,

   0.3 - 3% by weight, preferably
   0.5 - 2% by weight,

   0,0-diethyl-0-(3,5,6-trichloro-2-pyridyl)-thiophosphate, 0,0-diethyl-0-(α-cyanobenzyliden-amino)-thiophosphate, 0-ethyl-0-(2,4-dichlorophenyl)-S-n-propyldithiophosphate and/or 0,0-diethyl-0-(1,6-dihydro-6-oxo-1-phenyl-3-pyridazinyl)-thiophosphate and

   0.1 to 28% by weight, preferably
   1 - 18% by weight,

   (calculated as solid) of at least one organic-chemical binder and/or fixing agent or softener, and the weight ratio of the total proportion of organic-chemical binder and/or fixing agent or softener to the total proportion of the diluent (incl. solvent or solvent mixture and/or water and/or emulsifier and/or wetting agent) is

   1 : 1.2 to 1 : 99, preferably
   1 : 2 to 1 : 25.

7. Agent for preserving wood and timber materials according to one or more of Claims 1 to 6, characterised in that the diluent consists of at least one organic-chemical, poorly volatile solvent with an evaporation number above 35 and a flash point above 30 °C, preferably of an oily or oil-like, organic-chemical solvent or solvent mixture, or contains one or more of these poorly volatile solvents.

8. Agent for preserving wood and timber materials according to Claim 7, characterised in that

0.5 to 23% by weight, preferably
2 to 15% by weight,

of the organic-chemical, poorly volatile solvent or solvent mixture with a flash point above 30 °C is replaced by the same quantity of one or more organic-chemical binders and/or fixing agents, whereby those agents which are dispersible or emulsifiable, but preferably soluble, in the solvent or solvent mixture are used as the organic-chemical binder and/or fixing agent, the replacement taking place with the proviso that the resulting mixture or the resulting solvent mixture likewise has a flash point above 30 °C and the organic-chemical solvent or solvent mixture is an oily or oil-like solvent.

**9.** Agent for preserving wood and timber materials according to one or more of Claims 1 - 8, characterised in that the agent ready for use consists of

0.001 to 5% by weight, preferably
0.2 - 2% by weight,

1-[[2-(2,4-dichlorophenyl)-1,3-dioxolan-2-yl]methyl]-1H-1,2,4-triazol,

0.3 to 3% by weight, preferably
0.5 - 2% by weight,

0,0-diethyl-0-(3,5,6-trichloro-2-pyridyl)-thiophosphate, 0,0-diethyl-0-(α-cyanobenzyliden-amino)-thiophosphate, 0-ethyl-0-(2,4-dichlorophenyl)-S-n-propyldithiophosphate and/or 0,0-diethyl-0-(1,6-dihydro-6-oxo-1-phenyl-3-pyridazinyl)-thiophosphate,

0.1 - 28% by weight, preferably
1 - 18% by weight,

of at least one organic-chemical binder and/or fixing agent or softener,

0 - 5% by weight, preferably
0.01 - 4% by weight,

of at least one other biocide or biocide mixture soluble in the organic-chemical solvent or solvent mixture,

0 - 8% by weight, preferably
0.1 - 4% by weight,

of at least one water-soluble and/or water-insoluble dye, colour pigment and/or corrosion protection agent, siccative and/or UV-stabiliser and

99.599% by weight - 51% by weight, preferably
98.190% by weight - 70% by weight,

of a diluent or diluent mixture, consisting of at least one organic-chemical solvent or solvent mixture and/or water and/or at least one emulsifier and/or wetting agent or mixture thereof.

**10.** Concentrate for preserving wood and timber materials according to one or more of Claims 1 - 8, characterised in that the concentrate contains

0.001 - 5% by weight, preferably
0.2 - 2% by weight,

1-[[2-(2,4-dichlorophenyl)-1,3-dioxolan-2-yl]methyl]-1H-1,2,4-triazol,

0.3 - 3% by weight, preferably
0.5 - 2% by weight,

0,0-diethyl-0-(3,5,6-trichloro-2-pyridyl)-thiophosphate, 0,0-diethyl-0-(α-cyanobenzyliden-amino)-thiophosphate, 0-ethyl-0-(2,4-dichlorophenyl)-S-n-propyldithiophosphate and/or 0,0-diethyl-0-(1,6-dihydro-6-oxo-1-phenyl-3-pyridazinyl)-thiophosphate,

2 - 85% by weight, preferably
8 - 40% by weight,

(calculated as solid) of at least one organic-chemical binder and/or fixing agent or softener and the weight ratio of the total proportion of organic-chemical binder and/or fixing agent or softener to the total proportion of the diluent (incl. solvent or solvent mixture and/or water and/or emulsifier and/or wetting agent) is

8.5 : 1 to 1 : 48, preferably
1 : 1.45 to 1 : 11.5.

**11.** Concentrate for preserving wood and timber materials according to one or more of Claims 1 - 8 and 10, characterised in that the concentrate contains

0.001 - 5% by weight, preferably
0.2 - 2% by weight,

1-[[2-(2,4-dichlorophenyl)-1,3-dioxolan-2-yl]methyl]-1H-1,2,4-triazol,

0.3 - 3% by weight, preferably
0.5 - 2% by weight,

0,0-diethyl-0-(3,5,6-trichloro-2-pyridyl)-thiophosphate, 0,0-diethyl-0-(α-cyanobenzyliden-amino)-thiophosphate, 0-ethyl-0-(2,4-dichlorophenyl)-S-n-propyldithiophosphate and/or 0,0-diethyl-0-(1,6-dihydro-6-oxo-1-phenyl-3-pyridazinyl)-thiophosphate,

2 - 85% by weight, preferably
8 - 60% by weight,

of at least one organic-chemical binder and/or fixing agent or softener,

20 - 0% by weight, preferably
8 - 1% by weight,

of a fungicide or fungicide mixture which is soluble in the organic-chemical solvent or solvent mixture and a diluent or diluent mixture as the remaining constituent, consisting of at least one organic-chemical solvent or solvent mixture or water and/or solvent or solvent mixture and/or at least one emulsifier and/or wetting agent or a mixture thereof and also optionally dyes, colour pigments, corrosion protection agents, siccatives and/or UV-stabilisers.

**12.** Process for producing the agent or concentrate for preserving wood and timber materials according to one or more of Claims 1 to 11, characterised in that the active constituents of the agent or concentrate are added to the diluent and the other constituents at temperatures of

-5° C to 80° C, preferably
15° C to 45° C,

and at pressures of

400 mm Hg to 850 mm Hg (0.5332 to 1.1332 bar, preferably
600 mm Hg to 790 mm Hg (0.7999 to 1,0532 bar).

**Revendications**

1. Agent ou concentré pour la conservation du bois ou des matériaux en bois, à base de ou en utilisation conjointe de 1-[[2-(2,4-dichloro-phényl)-1,3-dioxolan-2-yl]méthyl]-1H-1,2,4-triazol, au moins un agent diluant ainsi qu'éventuellement un fongicide, adjuvant et/ou additif d'ouvrabilité, un liant organo-chimique et/ou agent fixateur, colorant, pigment, mélange de colorants ou de pigments, caractérisé en ce que l'agent ou concentré contient
   0,001 à 5% en poids, de préférence
   0,2% à 2% en poids
   de 1-[[2-(2,4-dichloro-phényl)-1,3-dioxolan-2-yl]méthyl]-1H-1,2,4-triazol,
   0,3 à 3% en poids, de préférence
   0,5 à 2% en poids
   de thiophosphate de 0,0-diéthyl-0-(3,5,6-trichloro-2)pyridyl), de thiophosphate de 0,0-diéthyl-0-(α-cyanobenzylidèn-amino), de S-n-propyldithiophosphate de 0-éthyl-0-(2,4-dichlorophényl) et/ou de thiophosphate de 0,0-diéthyl-0-(1,6-dihydro-6-oxo-1-phényl-3-pyridazinyl) et
   plus de 75% en poids, de préférence
   plus de 90% en poids
   d'un mélange constitué d'au moins un diluant et/ou au moins un émulsifiant et/ou agent mouillant ou un mélange de ceux-ci.

2. Agent ou concentré selon la revendication 1 caractérisé en ce que l'agent diluant contient ou consiste en un solvant ou mélange de solvants organo-chimique, de préférence d'au moins un solvant organo-chimique polaire et/ou un solvant organo-chimique huileux peu volatil ou un mélange d'eau et/ou d'au moins un solvant organo-chimique, de préférence au moins un solvant organo-chimique polaire et/ou un solvant ou mélange de solvants organo-chimique huileux peu volatil et au moins un agent émulsifiant et/ou un agent mouillant.

3. Agent ou concentré pour la conservation du bois ou des matériaux en bois selon la revendication 1 ou 2, caractérisé en ce que l'agent contient de
   0,1 à 25% en poids
   (exprimé comme matière sèche)
   de préférence de
   1 à 18% en poids
   d'au moins un liant et/ou agent fixateur.

4. Agent ou concentré selon l'une quelconque des revendications 1 à 3, caractérisé en ce que le rapport pondéral entre l'agent liant, l'agent fixateur et/ou les mélanges de ceux-ci et le diluant ou mélange de diluants et l'émulsifiant ou mélange d'émulsifiants et/ou un agent mouillant contenu dans l'agent ou dans la préparation concentrée est compris entre
   8,5:1 et 1:99.

5. Agent ou concentré selon l'une quelconque des revendications 1 à 4 caractérisé en ce que l'agent liant ou mélange d'agents liants organo-chimique est remplacé au moins partiellement par un plastifiant.

6. Agent ou concentré pour la conservation du bois ou des matériaux en bois selon l'une quelconque des revendications 1 à 5 caractérisé en ce que l'agent (l'agent prêt à l'emploi) contient de
   0,001 à 5% en poids, de préférence
   0,2 à 2% en poids
   de 1-[[2-(2,4-dichloro-phényl)-1,3-dioxolan-2-yl]méthyl]-1H-1,2,4-triazol,
   0,3 à 3% en poids, de préférence
   0,5 à 2% en poids
   de thiophosphate de 0,0-diéthyl-0-(3,5,6-trichloro-2-pyridyl), de thiophosphate de 0,0-diéthyl-0(α-cyanobenzylidèn-amino), de S-n-propyldithiophosphate de 0-éthyl-0-(2,4-dichlorophényl) et/ou de thiophosphate de 0,0-diéthyl-0-(1,6-dihydro-6-oxo-1-phényl-3-pyridazinyl) et
   0,1 à 28% en poids, de préférence
   1 à 18% en poids
   (exprimé comme matière sèche) d'au moins un liant et/ou agent fixateur organo-chimique ou plastifiant, et le rapport pondéral entre la teneur totale en agent liant et/ou agent fixateur ou plastifiant organo-chimique et la teneur totale en agent diluant (y compris le solvant ou le mélange de solvants et/ou l'eau

et/ou l'émulsifiant et/ou l'agent mouillant) est compris entre
1:1,2 et 1:99, de préférence
1:2 et 1:25.

7. Agent pour la conservation du bois ou des matériaux en bois selon l'une quelconque des revendications 1 à 6 caractérisé en ce que l'agent diluant est constitué d'au moins un solvant organo-chimique peu volatil présentant un indice d'évaporation supérieur à 35 et un point d'éclair supérieur à 30 °C, de préférence formé d'un solvant ou mélange de solvants organo-chimique huileux, ou contient un ou plusieurs de ces solvants peu volatils.

8. Agent pour la conservation du bois ou des matériaux en bois selon la revendication 7 caractérisé en ce que
0,5 à 23%, de préférence
2 à 15% en poids
du solvant ou mélange de solvants organo-chimique peu volatil avec un point d'éclair supérieur à 30 °C, est remplacé par la même quantité d'au moins un liant et/ou agent fixateur organo-chimique, le liant et/ou l'agent fixateur organo-chimique mis en oeuvre étant miscible ou émulsifiable dans le solvant ou le mélange de solvants, mais y étant de préférence solubles, cette substitution étant cependant liée au fait que le mélange ou mélange de solvants obtenu présente également un point d'éclair supérieur à 30 °C et que le solvant ou mélange de solvants organo-chimique soit un solvant huileux ou de type huileux.

9. Agent pour la conservation du bois ou des matériaux en bois selon l'une quelconque des revendications 1 à 8 caractérisé en ce que l'agent prêt à l'emploi est constitué de
0,001 à 5% en poids, de préférence
0,2 à 2% en poids
de 1-[[2-(2,4-dichloro-phényl)-1,3-dioxolan-2-yl]méthyl]-1H-1,2,4-triazol,
0,3 à 3% en poids, de préférence
0,5 à 2% en poids
de thiophosphate de 0,0-diéthyl-0-(3,5,6-trichloro-2-pyridyl), de thiophosphate de 0,0-diéthyl-0-(α-cyanobenzylidèn-amino), de S-n-propydithiophosphate de 0-éthyl-0-(2,4-dichlorophényl) et/ou de thiophosphate de 0,0-diéthyl-0-(1,6-dihydro-6-oxo-1-phényl-3-pyridazinyl),
0,1 à 28% en poids, de préférence
1 à 18% en poids
d'au moins un liant ou agent fixateur ou plastifiant organo-chimique,
0 à 5% en poids, de préférence
0,01 à 4% en poids
d'au moins un autre biocide ou mélange de biocides soluble dans le solvant ou mélange de solvants organo-chimique,
0 à 8% en poids, de préférence
0,1 à 4% en poids
d'au moins un colorant, pigment colorant et/ou agent protecteur contre la corrosion, siccatif et/ou stabilisant aux UV, soluble ou insoluble dans l'eau et
99,599% à 51% en poids, de préférence
98,190% à 70% en poids
d'un diluant ou mélange de diluants constitué d'au moins un solvant ou mélange de solvants organo-chimique et/ou d'eau et/ou d'au moins un émulsifiant et/ou agent mouillant ou d'un mélange de ceux-ci.

10. Concentré pour la conservation du bois ou des matériaux en bois selon l'une quelconque des revendications 1 à 8 caractérisé en ce que le concentré contient
0,001 à 5% en poids, de préférence
0,2 à 2% en poids
de 1-[[2-(2,4-dichloro-phényl)-1,3-dioxolan-2-yl]méthyl]-1H-1,2,4-triazol,
0,3 à 3% en poids, de préférence
0,5 à 2% en poids
de thiophosphate de 0,0-diéthyl-0-(3,5,6-trichloro-2)pyridyl), de thiophosphate de 0,0-diéthyl-0(α-cyanobenzylidèn-amino), de S-n-propydithiophosphate de 0-éthyl-0-(2,4-dichlorophényl) et/ou de thiophosphate de 0,0-diéthyl-0-(1,6-dihydro-6-oxo-1-phényl-3-pyridazinyl)

2 à 85% en poids, de préférence
8 à 40% en poids
(exprimé comme matière sèche d'au moins un liant et/ou agent fixateur ou plastifiant organo-chimique, le rapport pondéral entre la quantité de liant et/ou agent de fixation ou plastifiant organo-chimique et la quantité totale d'agent diluant (y compris le solvant ou le mélange de solvants et/ou l'eau et/ou l'émulsifiant et/ou l'agent mouillant) est compris entre
8,5:1 à 1:48, de préférence
1:1,45 à 1:11,5.

**11.** Concentré pour la conservation du bois ou des matériaux en bois selon l'une quelconque des revendications 1 à 8 et 10 caractérisé en ce que le concentré contient
0,001 à 5% en poids, de préférence
0,2% à 2% en poids
de 1-[[2-(2,4-dichloro-phényl)-1,3-dioxolan-2-yl]méthyl]-1H-1,2,4-triazol,
0,3 à 3% en poids, de préférence
0,5 à 2% en poids
de thiophosphate de 0,0-diéthyl-0-(3,5,6-trichloro-2)pyridyl), de thiophosphate de 0,0-diéthyl-0(α-cyanobenzylidèn-amino), de S-n-propyldithiophosphate de 0-éthyl-0-(2,4-dichlorophényl) et/ou de thiophosphate de 0,0-diéthyl-0-(1,6-dihydro-6-oxo-1-phényl-3-pyridazinyl),
2 à 85% en poids, de préférence
8 à 60% en poids
(exprimé comme matière sèche) d'au moins un liant et/ou agent fixateur ou plastifiant organo-chimique,
20 à 0% en poids, de préférence
8 à 1% en poids
d'un fongicide ou mélange de fongicides soluble dans le solvant ou mélange de solvants organo-chimique, le solde comprenant un diluant ou mélange de diluants, formé d'au moins un solvant ou mélange de solvants organo-chimique ou d'eau et/ou de solvants ou mélange de solvants et/ou d'au moins un émulsifiant et/ou agent mouillant ou mélange de ceux-ci de même qu'éventuellement de colorants, de pigments colorants, d'agents de protection contre la corrosion, de siccatif et/ou de stabilisants aux UV.

**12.** Procédé pour la préparation de l'agent ou du concentré pour la conservation du bois ou des matériaux en bois selon l'une quelconque des revendications 1 à 11 caractérisé en ce que les constituants actifs de l'agent ou du concentré sont mélangés à des températures de
-5 °C à 80 °C, de préférence de
15 à 45 °C,
et sous des pressions de
400 mm Hg à 850 mm Hg (0,5332 à 1,1332 bar), de préférence
600 mm Hg à 790 mm Hg (0,7999 à 1,0532 bar)
avec le diluant, ainsi qu'avec les autres constituants.